# EUROPEAN PATENT APPLICATION

(11) **EP 4 636 509 A1**
(43) Date of publication of application: **22.10.2025**
(21) Application number: 23920134.6
(22) Date of filing: 04.12.2023
(51) Int. Cl.: G04G 17/04, G04G 17/06, G04G 17/08, G04B 37/00, G04G 99/00

(54) **ELECTRONIC DEVICE HAVING STRUCTURE FOR MOUNTING COMPONENT**

(30) Priority: 03.02.2023 KR 20230015192; 15.02.2023 KR 20230019881
(71) Applicant: Samsung Electronics Co., Ltd., Suwon-si, Gyeonggi-do 16677 (KR)
(72) Inventor: OH, Donggyu, Suwon-si Gyeonggi-do 16677 (KR)
(74) Representative: Appleyard Lees IP LLP
(86) International application number: PCT/KR2023/019811
(87) International publication number: WO 2024/162585

(57) **Abstract**

An electronic device according to an embodiment comprises a bracket and an electronic component, the bracket comprising: a support surface which supports a part of the electronic component and is parallel to one surface of the electronic component; receiving surfaces connected to the support surface; and mounting recesses, at least a portion of each of which is arranged between a receiving surface and the support surface, and extending in a direction that is inclined with respect to the direction in which the one surface of the electronic component faces, wherein the other part of the electronic component is accommodated in at least a part of the mounting recesses, and the direction in which a virtual surface that contacts one location of the receiving surfaces faces is inclined with respect to the direction in which the support surface faces.

## Description

### [Technical Field]

The present disclosure relates to an electronic device including a structure for seating a component.

### [Background Art]

An electronic device may provide a space in which components may be disposed and may include a bracket that may protect the components. The bracket of the electronic device may be miniaturized while having various shapes to meet a need of a user. As the electronic device is miniaturized while having various shapes, a shape of a structure in which the components may be disposed in the bracket of the electronic device may vary.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device is provided. According to an embodiment, the electronic device may comprise a bracket. According to an embodiment, the electronic device may comprise an electronic component disposed in the bracket. According to an embodiment, the bracket may include a supporting surface, supporting a portion of the electronic component, parallel to one surface of the electronic component. According to an embodiment, the bracket may include a receiving surface connected to the supporting surface. According to an embodiment, the bracket may include a seating groove, at least a portion disposed between the receiving surface and the supporting surface, extending along a direction inclined with respect to a direction in which the one surface of the electronic component faces. According to an embodiment, another portion of the electronic component may be received in at least a portion of the seating groove. According to an embodiment, a direction in which an imaginary surface tangent to a point of the receiving surface faces may be inclined with respect to a direction in which the supporting surface faces.

An electronic device is provided. According to an embodiment, the electronic device may comprise a bracket. According to an embodiment, the electronic device may comprise an electronic component disposed in the bracket. According to an embodiment, the bracket may include a supporting surface, supporting a portion of the electronic component, parallel to one surface of the electronic component. According to an embodiment, the bracket may include a receiving surface, connected to the supporting surface, having a gradient with respect to the supporting surface. According to an embodiment, the bracket may include a seating groove, at least a portion disposed between the receiving surface and the supporting surface, extending along a direction inclined with respect to a direction in which the one surface of the electronic component faces. According to an embodiment, another portion of the electronic component may be received in at least a portion of the seating groove.

### [Description of the Drawings]

FIG. 1 is a block diagram of an electronic device in a network environment according to various embodiments.
FIG. 2A is a perspective view of an exemplary electronic device according to an embodiment.
FIG. 2B is a perspective view of an exemplary electronic device according to an embodiment.
FIG. 3 is an exploded perspective view of an exemplary electronic device according to an embodiment.
FIG. 4A is a perspective view of an exemplary electronic device according to an embodiment.
FIG. 4B is an enlarged perspective view of an exemplary bracket according to an embodiment.
FIG. 4C is a cross-sectional view illustrating an example of an exemplary bracket according to an embodiment cut along line A-A' of FIG. 4A.
FIG. 4D is a cross-sectional view illustrating an example of an exemplary electronic device according to an embodiment cut along line B-B' of FIG. 4A.
FIG. 5A is a cross-sectional view illustrating an example of an exemplary electronic device according to an embodiment cut along line C-C' of FIG. 4A.
FIG. 5B is a cross-sectional view illustrating an example of an exemplary electronic device according to an embodiment cut along line D-D' of FIG. 4A.
FIG. 6 indicates an example of a method of manufacturing an exemplary bracket according to an embodiment.
FIG. 7A is a top plan view of an exemplary electronic device according to an embodiment.
FIG. 7B is a top plan view of an exemplary bracket according to an embodiment.
FIG. 7C is a cross-sectional view illustrating an example of an exemplary bracket according to an embodiment cut along line E-E' of FIG. 7B.
FIG. 8A is a top plan view of an exemplary bracket according to an embodiment.
FIG. 8B is a cross-sectional view illustrating an example of an exemplary bracket according to an embodiment cut along line F-F' of FIG. 8A.

### [Mode for Invention]

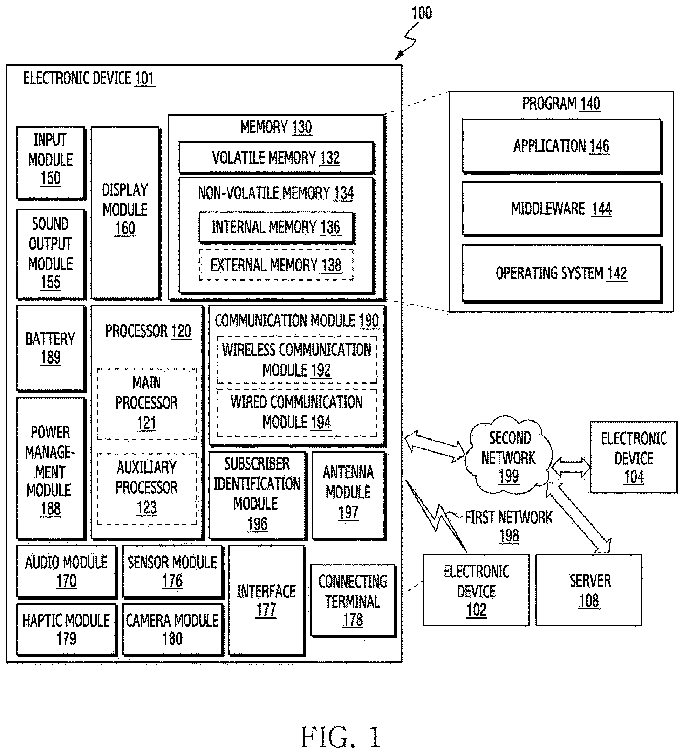

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

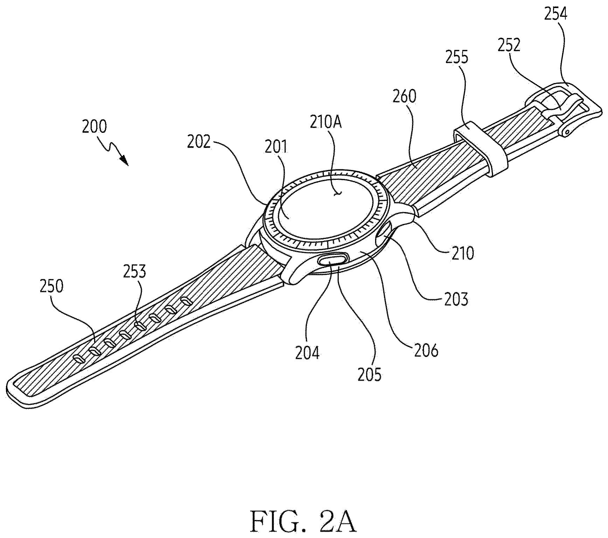

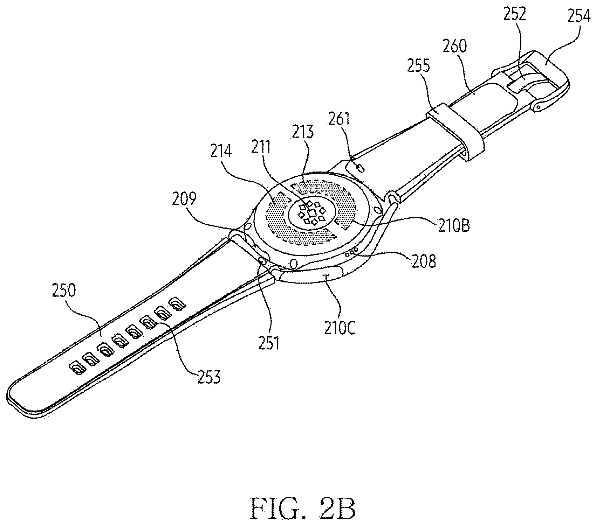

FIGS. 2A and 2B are perspective views of an electronic device according to an embodiment.

Referring to FIGS. 2A and 2B, an electronic device 200 (e.g., the electronic device 101 of FIG. 1) according to an embodiment may include a housing 210 including a first surface (or a front surface) 210A, a second surface (or a rear surface) 210B, and a side 210C surrounding a space between at least a portion of the first surface 210A and the second surface 210B, and fastening members 250 and 260 connected to at least a portion of the housing 210 and configured to detachably fasten the electronic device 200 to a part of a user's body (e.g., a wrist, an ankle, a head, a neck, an arm, a waist, or a leg). In an embodiment (not illustrated), the housing may refer to a structure forming a portion of the first surface 210A, the second surface 210B, and the side 210C of FIG. 2A. According to an embodiment, the first surface 210A may be formed of a front plate 201 (e.g., a glass plate or a polymer plate including various coating layers) that is at least partially substantially transparent. The second surface 210B may be implemented by a substantially opaque rear plate 207. The rear plate 207 may be implemented, for example, by coated or colored glass, ceramic, polymer, metal (e.g., aluminum, stainless steel (STS), or magnesium), or a combination of at least two of the materials. The side 210C may be coupled to the front plate 201 and the rear plate 207 and may be formed by a side bezel structure (or "a side member") 206 including metal and/or polymer. In some embodiments, the rear plate 207 and the side bezel structure 206 may be integrally formed and include the same material (e.g., a metal material such as aluminum). The fastening members 250 and 260 may be formed of various materials and shapes. The fastening members 250 and 260 may be formed by a woven fabric, leather, rubber, urethane, metal, ceramic, or a combination of at least two of the materials.

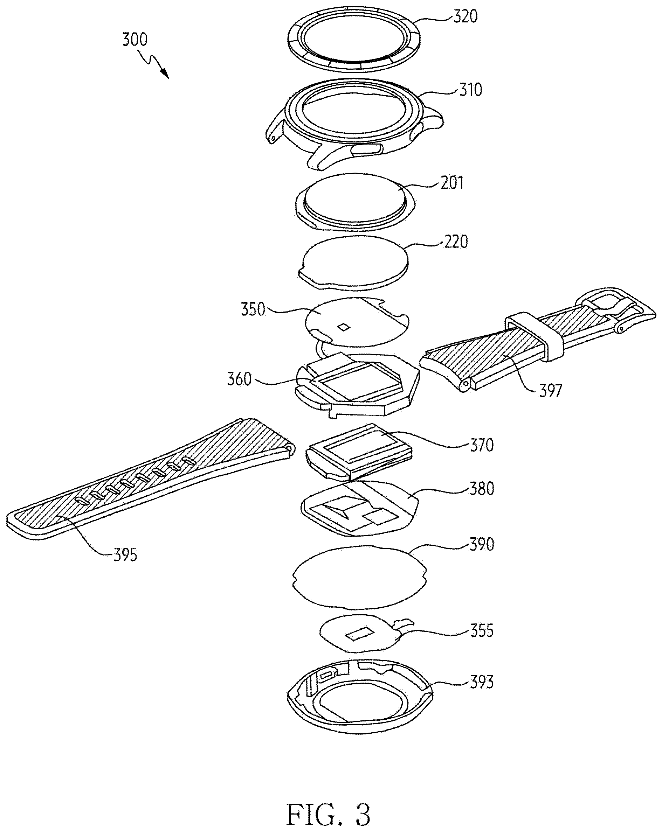

According to an embodiment, the electronic device 200 may include at least one of a display 220 (refer to FIG. 3), audio modules 205 and 208, a sensor module 211, key input devices 202, 203, and 204, and a connector hole 209. In some embodiments, the electronic device 200 may omit at least one of the components (e.g., the key input devices 202, 203, and 204, the connector hole 209, or the sensor module 211) or may additionally include another component.

The display 220 may be exposed, for example, through a significant portion of the front plate 201. A shape of the display 220 may be a shape corresponding to a shape of the front plate 201, and may be various shapes such as a circle, an oval, or a polygon. The display 220 may be coupled to or disposed adjacent to touch sensing circuitry, a pressure sensor capable of measuring an intensity (pressure) of a touch, and/or a fingerprint sensor.

The audio modules 205 and 208 may include the microphone hole 205 and the speaker hole 208. A microphone for obtaining external sound may be disposed inside the microphone hole 205, and in some embodiments, a plurality of microphones may be disposed to detect a direction of sound. The speaker hole 208 may be used as an external speaker and a call receiver. In some embodiments, the speaker hole 208 and the microphone hole 205 may be implemented as one hole, or a speaker may be included without the speaker hole 208 (e.g., a piezo speaker).

The sensor module 211 may generate an electrical signal or a data value corresponding to an internal operating state or an external environmental state of the electronic device 200. The sensor module 211 may include, for example, a biometric sensor module 211 (e.g., an HRM sensor) disposed on the second surface 210B of the housing 210. The electronic device 200 may further include at least one of a sensor module not illustrated, for example, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The sensor module 211 may include electrode regions 213 and 214 forming a portion of a surface of the electronic device 200 and biometric signal detection circuitry (not illustrated) electrically connected to the electrode regions 213 and 214. For example, the electrode regions 213 and 214 may include the first electrode region 213 and the second electrode region 214 disposed on the second surface 210B of the housing 210. The sensor module 211 may be configured such that the electrode regions 213 and 214 obtain an electrical signal from a part of the user's body, and the biometric signal detection circuitry detects biometric information of the user based on the electrical signal.

The key input devices 202, 203, and 204 may include the wheel key 202 disposed on the first surface 210A of the housing 210 and rotatable in at least one direction, and/or the side key buttons 203 and 204 disposed on the side 210C of the housing 210. The wheel key may have a shape corresponding to the shape of the front plate 201. In an embodiment, the electronic device 200 may not include some or all of the above-mentioned key input devices 202, 203, and 204, and the key input devices 202, 203, and 204 that are not included may be implemented on the display 220 in another form such as a soft key and the like. The connector hole 209 may receive a connector (e.g., a USB connector) for transmitting and receiving power and/or data with an external electronic device and may include another connector hole (not illustrated) that may receive a connector for transmitting and receiving an audio signal with an external electronic device.. The electronic device 200 may further include, for example, a connector cover (not illustrated) covering at least a portion of the connector hole 209 and blocking or reducing an inflow of an external foreign substance into the connector hole.

The fastening members 250 and 260 may be detachably fastened to at least a partial region of the housing 210 by using locking members 251 and 261. The fastening members 250 and 260 may include one or more of a fixing member 252, a fixing member fastening hole 253, a band guide member 254, and a band fixing ring 255.

The fixing member 252 may be configured to fix the housing 210 and the fastening members 250 and 260 to the part of the user's body (e.g., the wrist, the ankle, the head, the neck, the arm, the waist, or the leg). The fixing member fastening hole 253 may fix the housing 210 and the fastening members 250 and 260 to the part of the user's body by corresponding to the fixing member 252. The band guide member 254 may cause the fastening members 250 and 260 to be fastened in close contact with the part of the user's body, by being configured to limit a movement range of the fixing member 252 when the fixing member 252 is fastened to the fixing member fastening hole 253. The band fixing ring 255 may limit a movement range of the fastening members 250 and 260 in a state in which the fixing member 252 and the fixing member fastening hole 253 are fastened.

FIG. 3 is an exploded perspective view of an electronic device according to an embodiment.

Referring to FIG. 3, an electronic device 300 (e.g., the electronic device 101 of FIG. 1, the electronic device 200 of FIG. 2A and/or FIG. 2B) may include a side bezel structure 310, a wheel key 320, a front plate 201, a display 220, a first antenna 350, a second antenna 355, a supporting member 360 (e.g., a bracket), a battery 370, a printed circuit board 380, a sealing member 390, a rear plate 393, and fastening members 395 and 397. At least one of components of the electronic device 300 may be the same as or similar to at least one of the components of the electronic device 200 of FIGS. 1, 2A, and/or 2B, and a redundant description will be omitted below. The supporting member 360 may be connected to the side bezel structure 310 by being disposed inside the electronic device 300 or may be integrally formed with the side bezel structure 310. The supporting member 360 may be formed of, for example, a metal material and/or a non-metal (e.g., polymer) material. The display 220 may be coupled to one surface of the supporting member 360, and the printed circuit board 380 may be coupled to another surface of the supporting member 360. A processor, memory, and/or an interface may be mounted on the printed circuit board 380. The processor may include, for example, one or more of a central processing unit, an application processor, a graphic processing unit (GPU), an application processor sensor processor, or a communication processor.

The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 300 to an external electronic device, for example, and may include a USB connector, an SD card/MMC connector, or an audio connector.

The battery 370 is a device for supplying power to at least one component of the electronic device 300, and may include, for example, a non-rechargeable primary battery, a rechargeable secondary battery, or a fuel cell. At least a portion of the battery 370 may be disposed on substantially the same plane as, for example, the printed circuit board 380. The battery 370 may be integrally disposed inside the electronic device 200 or may be detachably disposed from the electronic device 200.

The first antenna 350 may be disposed between the display 220 and the supporting member 360. The first antenna 350 may include, for example, a near field communication (NFC) antenna, a wireless charging antenna, and/or a magnetic secure transmission (MST) antenna. For example, the first antenna 350 may perform short-range communication with an external device or wirelessly transmit and receive power required for charging, and transmit an electromagnetic signal including a short-range communication signal or payment data. In an embodiment, an antenna structure may be formed by at least a portion of the side bezel structure 310 and/or a portion of the supporting member 360 or a combination thereof. The second antenna 355 may be disposed between the printed circuit board 380 and the rear plate 393. The second antenna 355 may include, for example, a near field communication (NFC) antenna, a wireless charging antenna, and/or a magnetic secure transmission (MST) antenna. For example, the second antenna 355 may perform short-range communication with an external device or wirelessly transmit and receive power required for charging, and transmit an electromagnetic signal including a short-range communication signal or payment data. In an embodiment, an antenna structure may be formed by the side bezel structure 310 and/or a portion of the rear plate 393 or a combination thereof.

The sealing member 390 may be positioned between the side bezel structure 310 and the rear plate 393. The sealing member 390 may be configured to block or reduce moisture and a foreign substance flowing into a space surrounded by the side bezel structure 310 and the rear plate 393 from the outside.

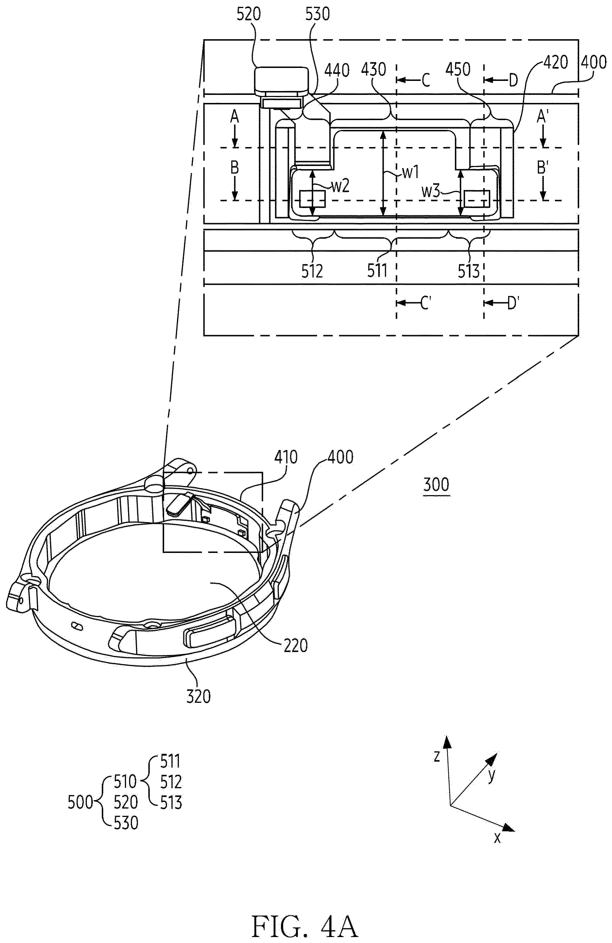

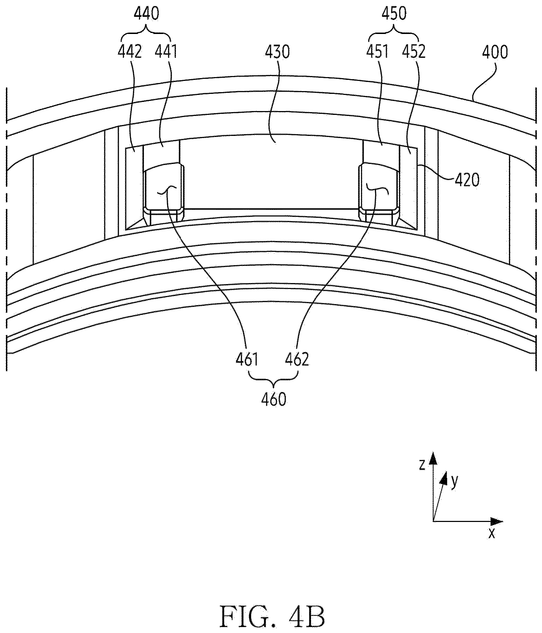

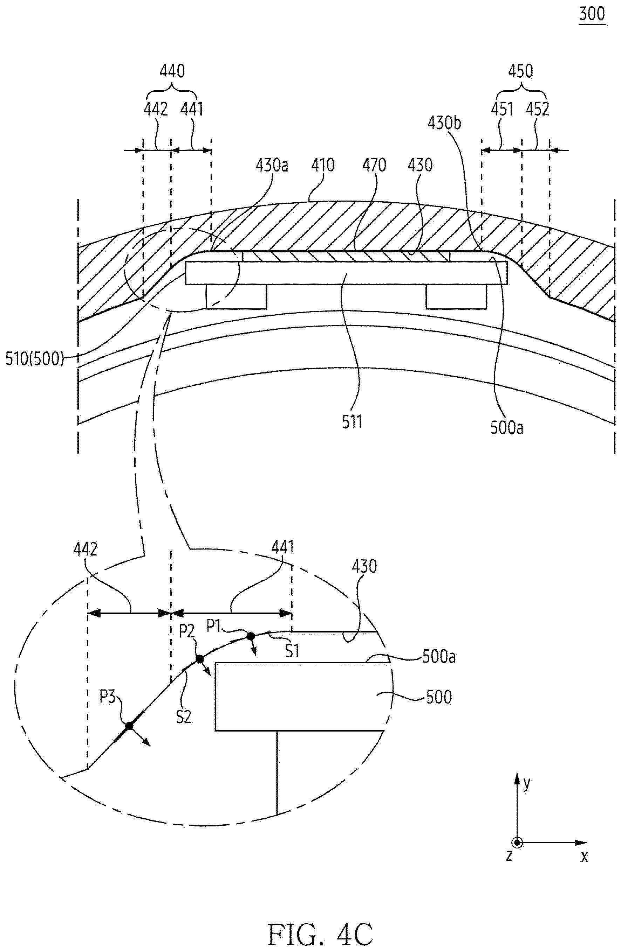

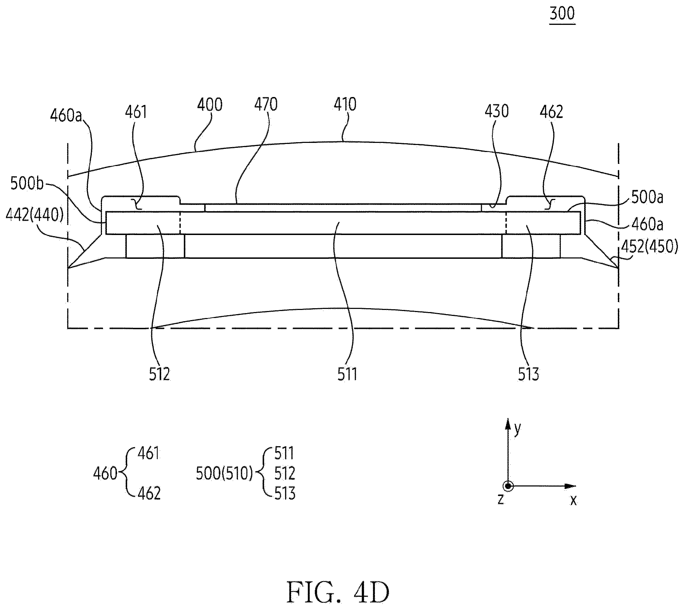

FIG. 4A is a perspective view of an exemplary electronic device according to an embodiment, FIG. 4B is an enlarged perspective view of an exemplary bracket according to an embodiment, FIG. 4C is a cross-sectional view illustrating an example of an exemplary bracket according to an embodiment cut along line A-A' of FIG. 4A, and FIG. 4D is a cross-sectional view illustrating an example of an exemplary electronic device according to an embodiment cut along line B-B' of FIG. 4A.

Referring to FIGS. 4A, 4B, 4C, and 4D, an electronic device 300 (e.g., the electronic device 101 of FIG. 1 and/or the electronic device 200 of FIGS. 2A and 2B) according to an embodiment may include a display 220, a wheel key 320, a bracket 400, and/or an electronic component 500.

According to an embodiment, the display 220 may be configured to provide visual information. For example, the display 220 may be configured to emit light to provide content to a user. According to an embodiment, the display 220 may be disposed on the bracket 400. A portion of the display 220 may be exposed to the outside of the electronic device 300 in a state of being coupled to the bracket 400.

According to an embodiment, the wheel key 320 may transmit an input of the user to the electronic device 300. The wheel key 320 may be movably coupled to the bracket 400. For example, the wheel key 320 may be rotatably coupled to the bracket 400. The electronic device 300 (or the processor 120 of FIG. 1) may provide a specified function to a user based on movement of the wheel key 320. For example, the electronic device 300 (or the processor 120) may be configured to display a visual object on the display 220 based on rotation of the wheel key 320 with respect to the bracket 400.

According to an embodiment, the bracket 400 may receive components of the electronic device 300. The bracket 400 may provide a space in which components of the electronic device 300 are disposed. The bracket 400 may protect components of the electronic device 300. According to an embodiment, the bracket 400 may define at least a portion of an external surface of the electronic device 300. For example, an external surface 410 of the bracket 400 may define at least a portion of the external surface of the electronic device 300. The external surface 410 of the bracket 400 may be exposed to the outside of the electronic device 300. The external surface 410 of the bracket 400 may surround (or wrap) components of the electronic device 300. For example, the external surface 410 of the bracket 400 may surround (or wrap) the display 220 and/or the electronic component 500. For example, the bracket 400 may have a substantially closed curve shape. For example, the bracket 400 may define at least a portion of the housing 210 of FIG. 2A. According to an embodiment, the bracket 400 may include a recessed region 420. The recessed region 420 may provide a space in which the electronic component 500 is received. For example, the recessed region 420 may be formed by a portion of the bracket 400 being inwardly recessed in.

According to an embodiment, the electronic component 500 may implement various functions of the electronic device 300. The electronic component 500 may be disposed in the bracket 400. The electronic component 500 may be received in the bracket 400. The electronic component 500 may be surrounded (or wrapped) by the bracket 400. According to an embodiment, the electronic component 500 may include a first printed circuit board 510, a second printed circuit board 520, and/or a third printed circuit board 530.

According to an embodiment, the first printed circuit board 510 may establish an electrical connection between components in the electronic device 300. For example, the first printed circuit board 510 may electrically connect a sensor (not illustrated) disposed on the first printed circuit board 510 and a processor (e.g., the processor 120 of FIG. 1). For example, the sensor disposed on the first printed circuit board 510 may include a Hall sensor for detecting a change in a magnetic field. The Hall sensor may obtain data indicating a change in a magnetic field by the rotation of the wheel key 320 with respect to the bracket 400. The processor 120 may identify a user input corresponding to the rotation of the wheel key 320 based on identifying data indicating the change in the magnetic field through the Hall sensor. The processor 120 may provide a specified function based on identifying the user input corresponding to the rotation of the wheel key 320. According to an embodiment, the first printed circuit board 510 may be disposed in the bracket 400. For example, the first printed circuit board 510 may be disposed in the recessed region 420 of the bracket 400. For example, the first printed circuit board 510 may be received (or seated) in the recessed region 420 of the bracket 400. The first printed circuit board 510 may have relatively rigidity compared to the third printed circuit board 530.

According to an embodiment, the first printed circuit board 510 may include a first portion 511, a second portion 512, and/or a third portion 513. The first portion 511 may be disposed on a supporting surface 430. The first portion 511 may have a first width w1, the second portion 512 may have a second width w2, and the third portion 513 may have a third width w3. According to an embodiment, a size of the first portion 511 may be different from a size of at least one of the second portion 512 and/or the third portion 513. The first width w1 may be different from at least one of the second width w2 and the third width w3. For example, the first width w1 may be greater than the second width w2. For example, the second width w2 may be substantially the same as the third width w3, but is not limited thereto. For example, the second width w2 may be different from the third width w3. For example, the first width w1 may be greater than the third width w3. However, it is not limited thereto. For example, the first width w1 may be substantially the same as the second width w2 and/or the third width w3. For example, the first width w1 may be smaller than the second width w2 and/or the third width w3. According to an embodiment, the first portion 511 may be disposed between the second portion 512 and the third portion 513. For example, the second portion 512 may be connected to one end of the first portion 511, and the third portion 513 may be connected to another end of the first portion 511 opposite to the one end of the first portion 511.

According to an embodiment, the second printed circuit board 520 may be distinguished from the first printed circuit board 510. The second printed circuit board 520 may be spaced apart from the first printed circuit board 510. For example, the second printed circuit board 520 may be disposed outside the recessed region 420 of the bracket 400, but is not limited thereto. The second printed circuit board 520 may be connected to the first printed circuit board 510 by the third printed circuit board 530. For example, the second printed circuit board 520 may be physically or electrically connected to the first printed circuit board 510 by the third printed circuit board 530. According to an embodiment, the second printed circuit board 520 may support a connector 521. The connector 521 may be disposed on the second printed circuit board 520. For example, the connector 521 may be one of a socket connector or a plug connector of a board to board connector (btob connector), but is not limited thereto. According to an embodiment, the second printed circuit board 520 may have relatively rigidity compared to the third printed circuit board 530.

According to an embodiment, the third printed circuit board 530 may connect the first printed circuit board 510 and the second printed circuit board 520. For example, the third printed circuit board 530 may extend from the first printed circuit board 510 to the second printed circuit board 520. For example, the third printed circuit board 530 may be connected to the second portion 512 of the first printed circuit board 510. However, it is not limited thereto. For example, the third printed circuit board 530 may be connected to at least one of the first portion 511 and the third portion 513 of the first printed circuit board 510. According to an embodiment, the third printed circuit board 530 may have flexibility compared to at least one of the first printed circuit board 510 and the second printed circuit board 520. For example, the third printed circuit board 530 may be referred to as a flexible printed circuit board (FPCB). According to an embodiment, a portion of the third printed circuit board 530 may be disposed in the recessed region 420 of the bracket 400. Another portion of the third printed circuit board 530 may be disposed outside the recessed region 420 of the bracket 400. However, it is not limited thereto. For example, an entire region of the third printed circuit board 530 may be disposed in the recessed region 420.

According to an embodiment, the first printed circuit board 510, the second printed circuit board 520, and the third printed circuit board 530 may be integrally formed. In a case that the first printed circuit board 510, the second printed circuit board 520, and the third printed circuit board 530 are integrally formed, the first printed circuit board 510, the second printed circuit board 520, and the third printed circuit board 530 may be referred to as a rigid flexible printed circuit board (RFPCB). However, it is not limited thereto. For example, the first printed circuit board 510, the second printed circuit board 520, and the third printed circuit board 530 may be connected to each other through solder or a connector, respectively.

According to an embodiment, the bracket 400 may include the supporting surface 430, a first receiving surface 440, a second receiving surface 450, at least one seating groove 460, and/or an adhesive member 470. For example, the supporting surface 430, the first receiving surface 440, the second receiving surface 450, the at least one seating groove 460, and/or the adhesive member 470 may be disposed in the recessed region 420 of the bracket 400.

According to an embodiment, the supporting surface 430 may support the electronic component 500. A portion of the electronic component 500 may be disposed on the supporting surface 430. For example, the first portion 511 of the first printed circuit board 510 may be disposed on the supporting surface 430. A portion of the electronic component 500 may be attached (or seated) on the supporting surface 430. For example, the first portion 511 of the first printed circuit board 510 may be attached (or seated) on the supporting surface 430. The supporting surface 430 may face the electronic component 500. For example, a first direction (e.g., a -y direction) in which the supporting surface 430 faces may be opposite to a direction (e.g., a +y direction) in which one surface 500a of the electronic component 500 faces. According to an embodiment, the supporting surface 430 may be parallel to the one surface 500a of the electronic component 500. As the supporting surface 430 is parallel to the one surface 500a of the electronic component 500, a distance between the supporting surface 430 and the one surface 500a of the electronic component 500 may be maintained at a first distance. The first distance may mean a distance between the supporting surface 430 and the one surface 500a of the electronic component 500 in the first direction (e.g., the -y direction). According to an embodiment, a width of the supporting surface 430 may correspond to a width of the electronic component 500. For example, the width of the supporting surface 430 may correspond to the first width w1 of the first portion 511 of the first printed circuit board 510.

According to an embodiment, the first receiving surface 440 may have a shape different from the supporting surface 430. A direction in which the first receiving surface 440 faces may be inclined with respect to the first direction (e.g., the -y direction) in which the supporting surface 430 faces. A direction in which an imaginary surface S1 tangent to a first point P1 of the first receiving surface 440 faces may be inclined with respect to a direction (e.g., the +y direction) in which the supporting surface 430 faces. A direction in which an imaginary surface tangent to a point of a component faces may mean a normal direction of the point. For example, the first receiving surface 440 may not be parallel or perpendicular to the supporting surface 430. According to an embodiment, the first receiving surface 440 may have a gradient with respect to the supporting surface 430. For example, the gradient of the first receiving surface 440 with respect to the supporting surface 430 may have a non-zero value. According to an embodiment, a second distance between the first receiving surface 440 and the one surface 500a of the electronic component 500 may change according to points P1, P2, and P3 of the first receiving surface 440. The second distance may mean a distance in the first direction (e.g., the -y direction) between the first receiving surface 440 and the one surface 500a of the electronic component 500. For example, a distance in the first direction (e.g., the -y direction) between the first point P1 of the first receiving surface 440 and the one surface 500a of the electronic component 500 may be different from a distance in the first direction (e.g., the -y direction) between the second point P2 of the first receiving surface 440 and the one surface 500a of the electronic component 500. For example, the distance in the first direction (e.g., the -y direction) between the first point P1 of the first receiving surface 440 and the one surface 500a of the electronic component 500 may be different from a distance in the first direction (e.g., the -y direction) between the third point P3 of the first receiving surface 440 and the one surface 500a of the electronic component 500. According to an embodiment, a gradient of the first receiving surface 440 may be different according to the points P1, P2, and P3 of the first receiving surface 440. For example, a gradient at the first point P1 of the first receiving surface 440 may be different from a gradient at the second point P2 of the first receiving surface 440. For example, the gradient at the first point P1 of the first receiving surface 440 may be different from a gradient at the third point P3 of the first receiving surface 440. For example, the first receiving surface 440 may be inclined or curved with respect to the supporting surface 430. According to an embodiment, the first receiving surface 440 may be connected to the supporting surface 430. For example, the first receiving surface 440 may be connected to one end 430a of the supporting surface 430. However, it is not limited thereto. For example, the first receiving surface 440 may be separated from the supporting surface 430 by being spaced apart from the supporting surface 430. According to an embodiment, the first receiving surface 440 may include a first curved surface 441 and/or a first inclined surface 442. Hereinafter, it is described that the first receiving surface 440 includes the first curved surface 441 and the first inclined surface 442, but is not limited thereto. For example, the first receiving surface 440 may include only one of the first curved surface 441 and the first inclined surface 442.

According to an embodiment, the first curved surface 441 may be directly connected to the supporting surface 430. For example, the first curved surface 441 may be connected to the one end 430a of the supporting surface 430. The first curved surface 441 may be curved with respect to the supporting surface 430 to have a curvature. According to an embodiment, as the first curved surface 441 has the curvature, a direction in which the imaginary surface S1 tangent to the first point P1 on the first curved surface 441 faces may be different from a direction in which an imaginary surface S2 tangent to the second point P2 on the first curved surface 441 faces. For example, the direction in which the imaginary surface S1 tangent to the first point P1 on the first curved surface 441 faces may be inclined with respect to the direction in which the imaginary surface S2 tangent to the second point P2 on the first curved surface 441 faces. According to an embodiment, a gradient of the first point P1 on the first curved surface 441 with respect to the supporting surface 430 may be different from a gradient of the second point P2 on the first curved surface 441 with respect to the supporting surface 430.

According to an embodiment, the first inclined surface 442 may be inclined with respect to the supporting surface 430. For example, the first inclined surface 442 may have a substantially constant gradient with respect to the supporting surface 430. For example, a gradient of the first inclined surface 442 with respect to the supporting surface 430 may be maintained. According to an embodiment, the first inclined surface 442 may be connected to the first curved surface 441. For example, the first inclined surface 442 may be spaced apart from the supporting surface 430. As the first inclined surface 442 is spaced apart from the supporting surface 430, the first curved surface 441 may be disposed between the first inclined surface 442 and the supporting surface 430. However, it is not limited thereto. For example, the first inclined surface 442 may be directly connected to the supporting surface 430.

According to an embodiment, the second receiving surface 450 may have a shape different from the supporting surface 430. A direction in which the second receiving surface 450 faces may be inclined with respect to the first direction (e.g., the -y direction) in which the supporting surface 430 faces. For example, the shape of the second receiving surface 450 may have a shape symmetrical to the first receiving surface 440 based on the supporting surface 430. For example, a description of a disposition relationship of the first receiving surface 440 with respect to the supporting surface 430 may be substantially equally applied to a disposition relationship of the second receiving surface 450 with respect to the supporting surface 430. For example, the second receiving surface 450 may not be parallel or perpendicular to the supporting surface 430. According to an embodiment, the second receiving surface 450 may have a gradient with respect to the supporting surface 430. For example, the gradient of the second receiving surface 450 with respect to the supporting surface 430 may have a non-zero value. According to an embodiment, a third distance between the second receiving surface 450 and the one surface 500a of the electronic component 500 may be changed according to points of the second receiving surface 450. The third distance may mean a distance in the first direction (e.g., the -y direction) between the second receiving surface 450 and the one surface 500a of the electronic component 500. For example, a distance in the first direction (e.g., -y direction) between one point of the second receiving surface 450 and the one surface 500a of the electronic component 500 may be different from a distance in the first direction (e.g., the -y direction) between another point of the second receiving surface 450 and the one surface 500a of the electronic component 500. According to an embodiment, a gradient of the second receiving surface 450 may be different according to the points of the second receiving surface 450. For example, a gradient at the one point of the second receiving surface 450 may be different from a gradient at the other point of the second receiving surface 450. For example, the second receiving surface 450 may be inclined or curved with respect to the supporting surface 430. According to an embodiment, the second receiving surface 450 may be connected to the supporting surface 430. For example, the second receiving surface 450 may be connected to another end 430b of the supporting surface 430. However, it is not limited thereto. For example, the second receiving surface 450 may be separated from the supporting surface 430 by being spaced apart from the supporting surface 430. According to an embodiment, the second receiving surface 450 may include a second curved surface 451 and/or a second inclined surface 452. Hereinafter, it is described that the second receiving surface 450 includes the second curved surface 451 and the second inclined surface 452, but is not limited thereto. For example, the second receiving surface 450 may include only one of the second curved surface 451 and the second inclined surface 452.

According to an embodiment, the second curved surface 451 may be directly connected to the supporting surface 430. For example, the second curved surface 451 may be connected to the other end 430b of the supporting surface 430. The second curved surface 451 may be curved with respect to the supporting surface 430 to have a curvature.

According to an embodiment, the second inclined surface 452 may be inclined with respect to the supporting surface 430. For example, the second inclined surface 452 may have a substantially constant gradient with respect to the supporting surface 430. For example, a gradient of the second inclined surface 452 with respect to the supporting surface 430 may be maintained. According to an embodiment, the second inclined surface 452 may be connected to the second curved surface 451. For example, the second inclined surface 452 may be spaced apart from the supporting surface 430. As the second inclined surface 452 is spaced apart from the supporting surface 430, the second curved surface 451 may be disposed between the second inclined surface 452 and the supporting surface 430. However, it is not limited thereto. For example, the second inclined surface 452 may be directly connected to the supporting surface 430.

According to an embodiment, the at least one seating groove 460 may receive another portion (e.g., the second portion 512 and/or the third portion 513) of the electronic component 500 distinct from a portion (e.g., the first portion 511) of the electronic component 500 supported by the supporting surface 430. The other portion of the electronic component 500 may be disposed in the at least one seating groove 460. For example, the at least one seating groove 460 may receive at least one of the second portion 512 and the third portion 513 of the first printed circuit board 510. For example, the at least one seating groove 460 may be formed by a portion of the bracket 400 being inwardly recessed in. For example, at least one of the first receiving surface 440 and the second receiving surface 450 may have a shape different from the one surface 500a of the electronic component 500. For example, at least one of the first receiving surface 440 and the second receiving surface 450 may be inclined or curved with respect to the one surface 500a of the electronic component 500 parallel to the supporting surface 430. As at least one of the first receiving surface 440 and the second receiving surface 450 is inclined or curved with respect to the one surface 500a of the electronic component 500, the electronic component 500 may not be seated in a region of the recessed region 420 including at least one of the first receiving surface 440 and the second receiving surface 450 in a case that the at least one seating groove 460 is omitted. The electronic device 300 according to an embodiment may provide a structure capable of seating the electronic component 500 by the at least one seating groove 460 disposed between the supporting surface 430 and the first receiving surface 440 or between the supporting surface 430 and the second receiving surface 450. For example, as the at least one seating groove 460 is formed between the supporting surface 430 and the first receiving surface 440 or between the supporting surface 430 and the second receiving surface 450, the electronic component 500 may not be lifted by the first receiving surface 440 and the second receiving surface 450.

According to an embodiment, the bracket 400 may further include at least one seating surface 460a. The at least one seating surface 460a may be disposed in the at least one seating groove 460. The at least one seating surface 460a may be perpendicular to the supporting surface 430. For example, a direction (e.g., a +x direction or a -x direction) in which the at least one seating surface 460a faces may be perpendicular to the direction (e.g., the -y direction) in which the supporting surface 430 faces. According to an embodiment, the at least one seating surface 460a may face a side 500b of the electronic component 500 perpendicular to the one surface 500a of the electronic component 500. For example, the direction (e.g., the +x direction or the -x direction) in which the at least one seating surface 460a faces may be opposite to a direction (e.g., the -x direction or the +x direction) in which the side 500b of the electronic component 500 faces. For example, the at least one seating surface 460a may be perpendicular to the one surface 500a of the electronic component 500. For example, the at least one seating surface 460a may be parallel to the side 500b of the electronic component 500. For example, in a case that the at least one seating surface 460a is inclined or curved with respect to the side 500b of the electronic component 500, the electronic component 500 may not be seated in the at least one seating groove 460. Since the at least one seating surface 460a faces the side 500b of the electronic component 500, the electronic device 300 according to an embodiment may provide a structure in which the electronic component 500 may be seated in the at least one seating groove 460.

According to an embodiment, the at least one seating groove 460 may include a first seating groove 461 and a second seating groove 462.

According to an embodiment, the first seating groove 461 may be disposed between at least a portion of the first receiving surface 440 and at least a portion of the supporting surface 430. The first seating groove 461 may be at least partially surrounded by the supporting surface 430 and the first receiving surface 440. The first seating groove 461 may be at least partially wrapped by the supporting surface 430 and the first receiving surface 440. According to an embodiment, the first seating groove 461 may receive the second portion 512 of the first printed circuit board 510. The second portion 512 may be disposed in the first seating groove 461. According to an embodiment, a size of the first seating groove 461 may correspond to the electronic component 500. For example, a width of the first seating groove 461 may correspond to the second width w2 of the second portion 512. However, it is not limited thereto. For example, the width of the first seating groove 461 may correspond to the first width w1 of the first portion 511.

According to an embodiment, the second seating groove 462 may be disposed between at least a portion of the second receiving surface 450 and at least a portion of the supporting surface 430. The second seating groove 462 may be at least partially surrounded by the supporting surface 430 and the second receiving surface 450. The second seating groove 462 may be at least partially wrapped by the supporting surface 430 and the second receiving surface 450. According to an embodiment, the second seating groove 462 may receive the third portion 513 of the first printed circuit board 510. The third portion 513 may be disposed in the second seating groove 462. According to an embodiment, a size of the second seating groove 462 may correspond to the electronic component 500. For example, a width of the second seating groove 462 may correspond to the third width w3 of the third portion 513. However, it is not limited thereto. For example, the width of the second seating groove 462 may correspond to the first width w1 of the first portion 511. According to an embodiment, the second seating groove 462 may be spaced apart from the first seating groove 461. For example, at least a portion of the supporting surface 430 may be disposed between the first seating groove 461 and the second seating groove 462.

According to an embodiment, the adhesive member 470 may attach the electronic component 500 to the bracket 400. The adhesive member 470 may be disposed between the electronic component 500 and the supporting surface 430. For example, the adhesive member 470 may attach the electronic component 500 on the bracket 400 by being interposed between the one surface 500a of the electronic component 500 and the supporting surface 430.

As described above, the electronic device 300 according to an embodiment may provide a structure in which the electronic component 500 may be stably disposed in the bracket 400 by the at least one seating groove 460 disposed between the supporting surface 430 and the receiving surfaces 440 and 450 having a shape different from the supporting surface 430.

Meanwhile, in FIGS. 4A, 4B, 4C, and 4D, it has been described that the electronic component 500 is disposed in the recessed region 420, but an embodiment is not limited thereto. For example, another component other than the electronic component 500 may be disposed in the recessed region 420. The other component may mean a component that does not perform an electrical operation.

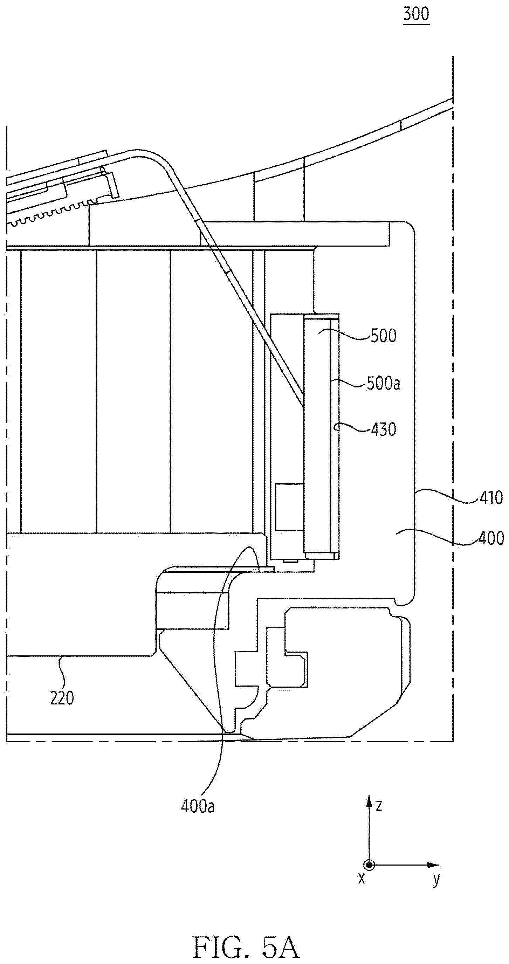

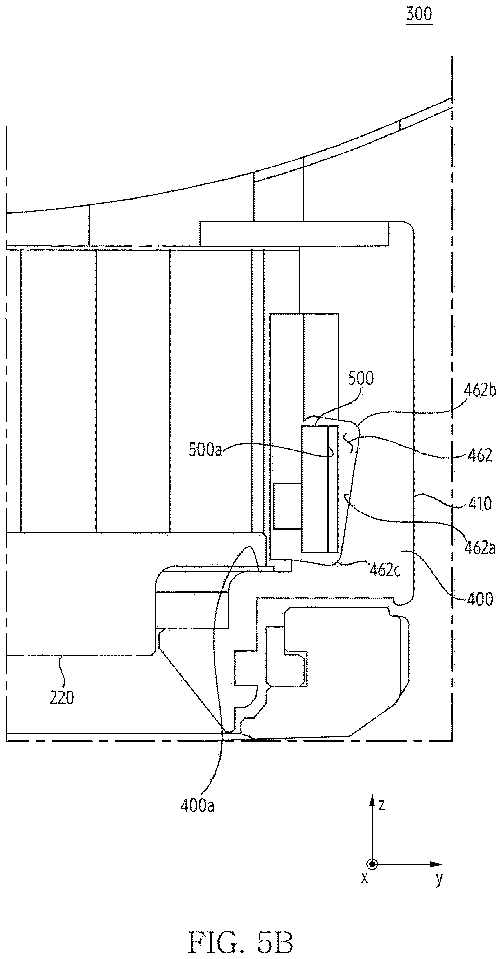

FIG. 5A is a cross-sectional view illustrating an example of an exemplary electronic device according to an embodiment cut along line C-C' of FIG. 4A, and FIG. 5B is a cross-sectional view illustrating an example of an exemplary electronic device according to an embodiment cut along line D-D' of FIG. 4A.

Referring to FIGS. 5A and 5B, according to an embodiment, a display 220 may be disposed on one surface 400a of a bracket 400. The one surface 400a of the bracket 400 may support the display 220. For example, the one surface 400a of the bracket 400 may be perpendicular to a supporting surface 430. For example, a direction (e.g., a +z direction) in which the one surface 400a of the bracket 400 faces may be substantially perpendicular to a direction (e.g., a -y direction) in which the supporting surface 430 faces. For example, the one surface 400a of the bracket 400 may be perpendicular to one surface 500a of an electronic component 500.

According to an embodiment, at least one seating groove 460 may extend in a direction inclined with respect to a direction (e.g., a +y direction) in which the one surface 500a of the electronic component 500 faces. Hereinafter, a structure of the at least one seating groove 460 will be described based on a second seating groove 462, but this is for convenience of explanation. For example, a description of a structure of the second seating groove 462 may be substantially equally applied to a structure of the first seating groove 461. The second seating groove 462 may extend along the direction inclined with respect to the direction (e.g., the +y direction) in which the one surface 500a of the electronic component 500 faces. For example, the extension direction of the second seating groove 462 may be inclined with respect to an external surface 410 of the bracket 400. For example, the extension direction of the second seating groove 462 may be inclined with respect to the one surface 400a of the bracket 400. As the second seating groove 462 is inclined and extends, a bottom surface 462a of the second seating groove 462 may be inclined with respect to the one surface 500a of the electronic component 500. According to an embodiment, a distance between one edge 462b of the second seating groove 462 and the external surface 410 of the bracket 400 may be different from a distance between another edge 462c of the second seating groove 462 and the external surface 410 of the bracket 400. The one edge 462b of the second seating groove 462 may be opposite to the other edge 462c of the second seating groove 462. For example, the distance between the one edge 462b of the second seating groove 462 and the external surface 410 of the bracket 400 may be smaller than the distance between the other edge 462c of the second seating groove 462 and the external surface 410 of the bracket 400.

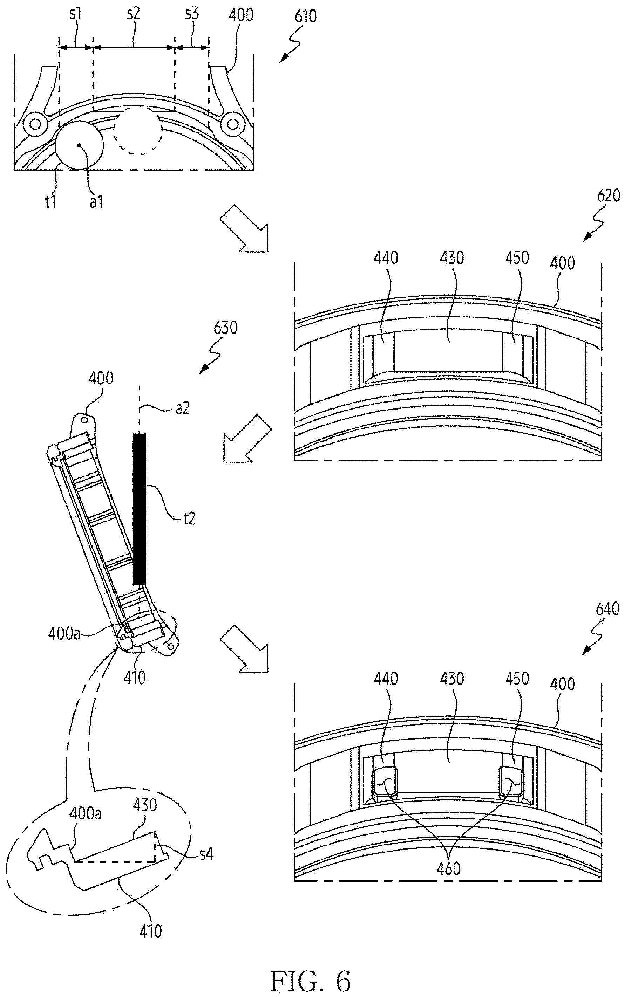

According to an embodiment, a method of forming the at least one seating groove 460 may be different from a method of forming the supporting surface 430, a first receiving surface (e.g., the first receiving surface 440 of FIGS. 4A, 4B, 4C, and 4D), and a second receiving surface (e.g., the second receiving surface 450 of FIGS. 4A, 4B, 4C, and 4D). For example, a process of forming the at least one seating groove 460, the supporting surface 430, the first receiving surface 440, and the second receiving surface 450 may be described through FIG. 6.

FIG. 6 indicates an example of a method of manufacturing an exemplary bracket according to an embodiment.

Referring to FIG. 6, in a state 610, a bracket 400 may be cutted by a first tool t1. For example, the first tool t1 may cut a portion of the bracket 400 by rotating with respect to the bracket 400. For example, a first rotation axis a1 of the first tool t1 may be parallel to a direction in which one surface 400a of the bracket 400 faces. The first tool t1 may move tangent to the bracket 400 while rotating based on the first rotation axis a1. For example, the first tool t1 may move along a first section s1, a second section s2, and a third section s3 while rotating based on the first rotation axis a1. The first section s1 and the third section s3 may be inclined or curved with respect to the second section s2. The second section s2 may mean a trajectory in which the first tool t1 is linearly moved. A process performed by the first tool t1 in the state 610 may be referred to as T-CUT tool machining.

In a state 620, as the first tool t1 moves along the first section s1, the second section s2, and the third section s3, a supporting surface 430, a first receiving surface 440, and a second receiving surface 450 may be formed. For example, the first receiving surface 440 may be formed by a trajectory of the first tool t1 in the first section s1. For example, the supporting surface 430 may be formed by a trajectory of the first tool t1 in the second section s2. For example, the second receiving surface 450 may be formed by a trajectory of the first tool t1 in the third section s3. For example, a radius of curvature of at least one of the first receiving surface 440 and the second receiving surface 450 may have a size that is 1 to 5 times a radius of curvature of the first tool t1, but is not limited thereto.

In a state 630, the bracket 400 may be cut by a second tool t2. The second tool t2 may cut a portion of the bracket 400 by rotating with respect to the bracket 400. For example, a second rotation axis a2 of the second tool t2 may be inclined in the direction in which the one surface 400a of the bracket 400 faces. The second rotation axis a2 of the second tool t2 may be inclined with respect to an external surface 410 of the bracket 400. For example, since the bracket 400 has a closed curve shape, the bracket 400 may be inclined in the state 630 to secure a space in which the second tool t2 may move into the bracket 400. The second tool t2 may be inserted into the bracket 400 while rotating based on the second rotation axis a2. For example, a process performed by the second tool t2 may be referred to as general tool machining.

In a state 640, as the second tool t2 is inserted into the bracket 400 while rotating based on the second rotation axis a2, at least one seating groove 460 may be formed. As the second rotation axis a2 of the second tool t2 is inclined with respect to the direction in which the one surface 400a of the bracket 400 faces, an extension direction of the at least one seating groove 460 may be inclined with respect to the direction in which the one surface 400a of the bracket 400 faces. For example, a radius of curvature of a corner of the at least one seating groove 460 may have a size that is 1 to 5 times a radius of curvature of the second tool t2, but is not limited thereto. For example, since the second rotation axis a2 of the second tool t2 is inclined with respect to the external surface 410 of the bracket 400, in a case of forming the supporting surface 430 and the receiving surfaces 440 and 450 through the process corresponding to the state 630, the second tool t2 may move along a path such as a trajectory s4. In a case that the second tool t2 moves along the path such as the trajectory s4, a distance between the external surface 410 of the bracket 400 and at least one of the supporting surface 430 and the receiving surfaces 440 and 450 may be relatively reduced. As a thickness of the bracket 400 is reduced, in a case that the distance between the external surface 410 of the bracket 400 and at least one of the supporting surface 430 and the receiving surfaces 440 and 450 is relatively reduced, a possibility of the bracket 400 being damaged may increase. For example, in a case that only the process corresponding to the state 610 is performed, an electronic component (e.g., the electronic component 500 of FIGS. 4A and 4D) may not be seated by the receiving surfaces 440 and 450 having a shape different from the supporting surface 430. Since a process of forming the supporting surface 430 and the receiving surfaces 440 and 450 and a process of forming the at least one seating groove 460 are distinguished from each other, an electronic device 300 according to an embodiment may provide the bracket 400 having a structure in which the electronic component 500 may be stably seated while being robust to damage.

As described above, the electronic device (e.g., the electronic device 300 of FIGS. 4A, 4C, and 4D) according to an embodiment may provide a structure in which the electronic component 500 may be stably disposed in the bracket 400 by the at least one seating groove 460 disposed between the supporting surface 430 and the receiving surfaces 440 and 450 having the shape different from the supporting surface 430.

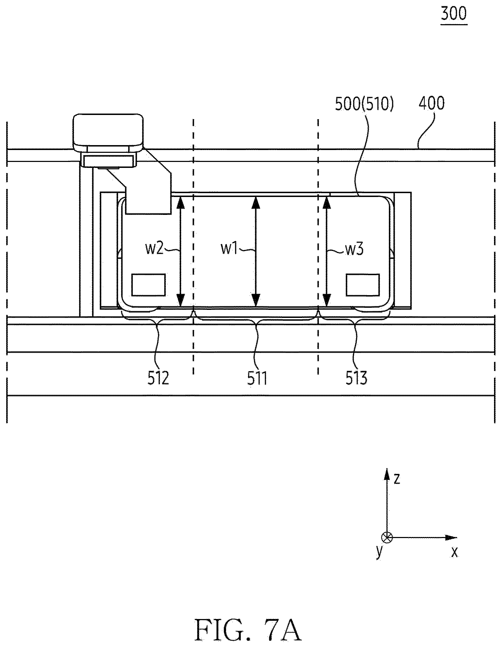

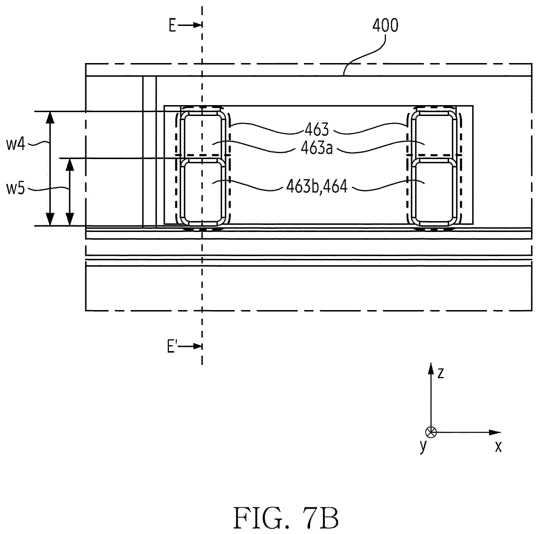

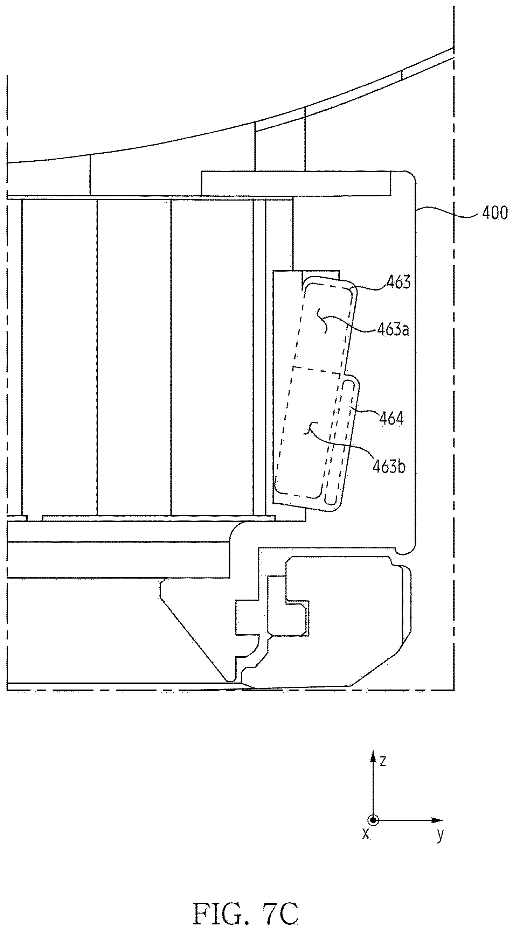

FIG. 7A is a top plan view of an exemplary electronic device according to an embodiment, FIG. 7B is a top plan view of an exemplary bracket according to an embodiment, and FIG. 7C is a cross-sectional view illustrating an example of an exemplary bracket according to an embodiment cut along line E-E' of FIG. 7B.

Referring to FIGS. 7A and 7B, according to an embodiment, a first printed circuit board 510 may have a substantially constant width. For example, a first width w1 of a first portion 511 may correspond to at least one of a second width w2 of a second portion 512 and a third width w3 of a third portion 513. For example, the first width w1 may be substantially the same as the second width w2. For example, the first width w1 may be substantially the same as the third width w3.

According to an embodiment, at least one seating groove 460 may include at least one first region 463 and at least one second region 464. The at least one first region 463 may receive an electronic component 500. For example, the at least one first region 463 may receive at least one of the second portion 512 and the third portion 513. For example, the at least one first region 463 may receive the second portion 512. For example, the at least one first region 463 may receive the third portion 513. According to an embodiment, the at least one second region 464 may be connected to the at least one first region 463. For example, the at least one second region 464 may be tangent to the at least one first region 463. According to an embodiment, the at least one second region 464 may have a width smaller than a width of the at least one first region 463. For example, a fourth width w4 of the at least one first region 463 may be greater than a fifth width w5 of the at least one second region 464. According to an embodiment, the fourth width w4 of the at least one first region 463 may correspond to a width of the electronic component 500. For example, the fourth width w4 of the at least one first region 463 may correspond to the first width w1. For example, the fifth width w5 of the at least one second region 464 may be smaller than the first width w1.

According to an embodiment, the at least one first region 463 and the at least one second region 464 may be formed by the process corresponding to the state 630 of FIG. 6. For example, as the process corresponding to the state 630 of FIG. 6 is performed, a portion 463a of the at least one first region 463 may be formed. As the process corresponding to the state 630 of FIG. 6 is performed after the portion 463a of the at least one first region 463 is formed, another portion 463b of the at least one first region 463 and the at least one second region 464 may be formed.

As described above, an electronic device 300 according to an embodiment may provide a structure in which the electronic component 500 may be stably disposed in the bracket 400 by the at least one seating groove 460.

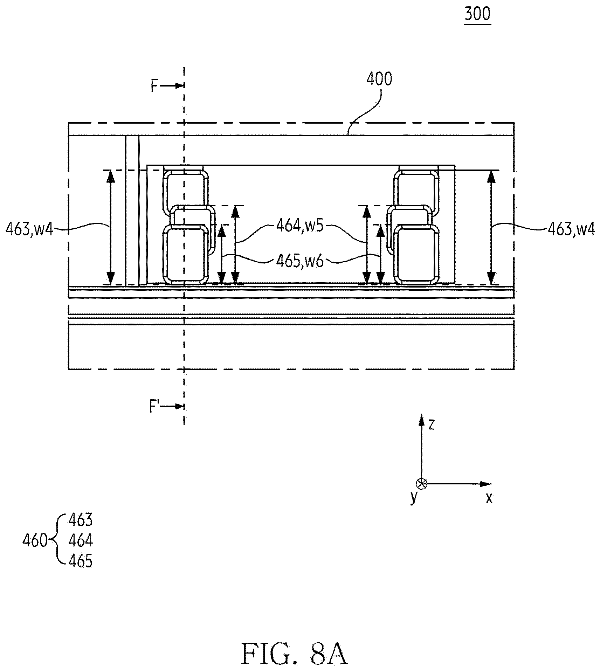

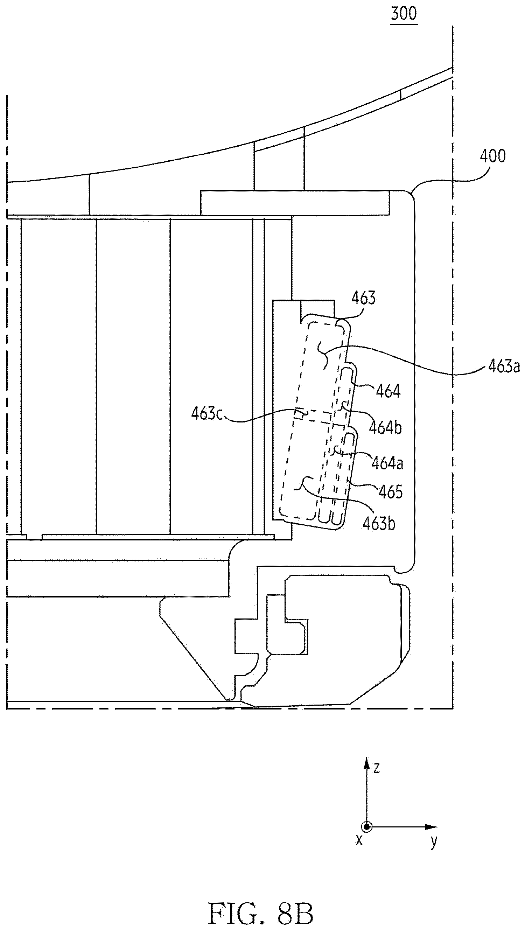

FIG. 8A is a top plan view of an exemplary bracket according to an embodiment, and FIG. 8B is a cross-sectional view illustrating an example of an exemplary bracket according to an embodiment cut along line F-F' of FIG. 8A.

Referring to FIGS. 8A and 8B, according to an embodiment, at least one seating groove 460 may include at least one first region 463, at least one second region 464, and at least one third region 465. The at least one first region 463 may receive an electronic component 500. The at least one first region 463 and the at least one second region 464 of FIGS. 8A and 8B may be substantially the same as the at least one third region 465 of FIGS. 7A, 7B, and 7C, and thus a redundant description thereof will be omitted. According to an embodiment, the at least one second region 464 may be connected to the at least one first region 463. For example, the at least one second region 464 may be disposed between the at least one first region 463 and the at least one third region 465. For example, the at least one second region 464 may be tangent to the at least one first region 463 and the at least one third region 465. According to an embodiment, the at least one second region 464 may have a width smaller than a width of the at least one first region 463. For example, a fourth width w4 of the at least one first region 463 may be greater than a fifth width w5 of the at least one second region 464. According to an embodiment, the at least one third region 465 may have a width smaller than a width of the at least one second region 464. For example, a sixth width w6 of the at least one third region 465 may have a width smaller than the fifth width w5 of the at least one second region 464.

According to an embodiment, the at least one first region 463, the at least one second region 464, and the at least one third region 465 may be formed by the process corresponding to the state 630 of FIG. 6. For example, as the process corresponding to the state 630 of FIG. 6 is performed, a portion 463a of the at least one first region 463 may be formed. As the process corresponding to the state 630 of FIG. 6 is performed after the portion 463a of the at least one first region 463 is formed, another portion 463b of the at least one first region 463, a portion 464a of the at least one second region 464, and the at least one third region 465 may be formed. In a state in which the other portion 463b of the at least one first region 463, and the at least one third region 465 are formed, the portion 463a of the at least one first region 463, and the at least one third region 465 may be disconnected from each other. In the state in which the other portion 463b of the at least one first region 463, and the at least one third region 465 are formed, the portion 463a of the at least one first region 463, and the at least one third region 465 may be disconnected from each other. As the process corresponding to the state 630 of FIG. 6 is performed after the other portion 463b of the at least one first region 463, the portion 464a of the at least one second region 464, and the at least one third region 465 are formed, still another portion 463c of the at least one first region 463 and another portion 464b of the at least one second region 464 may be formed.

As described above, an electronic device 300 according to an embodiment may provide a structure in which the electronic component (e.g., the electronic component 500 of FIGS. 4A, 4C, and 4D) may be stably disposed in the bracket 400 by the at least one seating groove 460.

In order to secure a space for disposing components in a bracket of an electronic device, various processes may be performed on the bracket. Due to a limitation of a process for forming the space in the bracket, in a case that a thickness of the bracket becomes relatively thin, a possibility the bracket being damaged may increase. Due to the limitation of the process for forming the space in the bracket, a structure in which the components may be stably disposed may not be formed. An electronic device may require a bracket that is robust to damage while the components may be stably disposed.

An electronic device (e.g., the electronic device 300 of FIGS. 4A, 4C, and 4D) is provided. According to an embodiment, the electronic device may comprise a bracket (e.g., the bracket 400 of FIGS. 4A, 4B, 4C, and 4D). According to an embodiment, the electronic device may comprise an electronic component (e.g., the electronic component 500 of FIGS. 4A, 4C, and 4D) disposed in the bracket. According to an embodiment, the bracket may include a supporting surface (e.g., the supporting surface 430 of FIGS. 4A, 4B, 4C, and 4D), supporting a portion of the electronic component, parallel to one surface (e.g., the one surface 500a of FIGS. 4C and 4D) of the electronic component. According to an embodiment, the bracket may include a receiving surface (e.g., the first receiving surface 440 of FIGS. 4A, 4B, 4C, and 4D) connected to the supporting surface. According to an embodiment, the bracket may include a seating groove (e.g., the at least one seating groove 460 of FIGS. 4B and 4D), at least a portion disposed between the receiving surface and the supporting surface, extending along a direction inclined with respect to a direction in which the one surface of the electronic component faces. According to an embodiment, another portion of the electronic component may be received in at least a portion of the seating groove. According to an embodiment, a direction in which an imaginary surface (e.g., the imaginary surface S1 of FIG. 4C) tangent to a point (e.g., the first point P1 of FIG. 4C) of the receiving surface faces may be inclined with respect to a direction in which the supporting surface faces.

The electronic device according to an embodiment may provide a structure in which the electronic component may be stably seated in the bracket by the seating groove disposed between the supporting surface and the receiving surface.

According to an embodiment, the bracket may include a recessed region (e.g., the recessed region 420 of FIGS. 4A and 4B) formed by a portion of the bracket being inwardly recessed in. According to an embodiment, the supporting surface, the receiving surface, and the seating groove may be disposed in the recessed region.

The electronic device according to an embodiment may provide a structure in which the electronic component may be stably supported in the bracket by the seating groove disposed in the recessed region.

According to an embodiment, the receiving surface may include a curved surface (e.g., the first curved surface 441 of FIGS. 4B and 4C), connected to one end of the supporting surface, curved to have a curvature. According to an embodiment, the receiving surface may include an inclined surface (e.g., the first inclined surface 442 of FIGS. 4B and 4C), connected to the curved surface, inclined with respect to the supporting surface.

The electronic device according to an embodiment may provide a structure in which the electronic component may be stably seated in the bracket by the seating groove disposed between the supporting surface and the receiving surface having a shape different from a shape of the supporting surface.

According to an embodiment, the bracket may include an external surface (e.g., the external surface 410 of FIGS. 4A and 4B) which is exposed to an outside of the electronic device and surrounding the electronic component. According to an embodiment, a distance between one edge (e.g., the one edge 462b of FIG. 5B) of the seating groove and the external surface may be different from a distance between another edge (e.g., the other edge 462c of FIG. 5B) of the seating groove and the external surface.

Since the seating groove is formed along an inclined direction, the electronic device according to an embodiment may provide a structure in which the distance between the one edge of the seating groove and the external surface and the distance between the other edge of the seating groove and the external surface are different.

According to an embodiment, the electronic component may include a first printed circuit board (e.g., the first printed circuit board 510 of FIG. 4A), including a first portion (e.g., the first portion 511 of FIG. 4A), having a first width, disposed on the supporting surface, and a second portion (e.g., the second portion 512 of FIG. 4A) having a second width different from the first width and disposed in the seating groove. According to an embodiment, a width of the supporting surface may correspond to the first width. According to an embodiment, a width of the seating groove may correspond to the second width.

The electronic device according to an embodiment may provide a structure in which various components may be received by at least one seating groove defined between the supporting surface and a first receiving surface and between the supporting surface and a second receiving surface.

According to an embodiment, the electronic component may include a second printed circuit board (e.g., the second printed circuit board 520 of FIG. 4A), distinct from the first printed circuit board, in which a connector is disposed. According to an embodiment, the electronic component may further include a third printed circuit board (e.g., the third printed circuit board 530 of FIG. 4A), connecting the first printed circuit board and the second printed circuit board, having flexibility.

The electronic device according to an embodiment may provide a structure in which various components may be disposed by the at least one seating groove defined between the supporting surface and the first receiving surface and between the supporting surface and the second receiving surface.

According to an embodiment, the first width may be larger than the second width.

According to an embodiment, the receiving surface may be connected to one end (e.g., the one end 430a of FIG. 4C) of the supporting surface. According to an embodiment, the bracket may include another receiving surface (e.g., the second receiving surface 450 of FIG. 4C), connected to another end (e.g., the other end 430b of FIG. 4C) of the supporting surface. According to an embodiment, the bracket may further include another seating groove (e.g., the second seating groove 462 of FIG. 4C), at least a portion is disposed between the supporting surface and the other receiving surface, extending along a direction having a gradient with respect to the direction in which the one surface of the electronic component faces. According to an embodiment, a direction in which an imaginary surface tangent to a point of the other receiving surface faces may be inclined with respect to a direction in which the supporting surface faces.

The electronic device according to an embodiment may provide a structure in which various components may be seated by the at least one seating groove defined between the supporting surface and the first receiving surface and between the supporting surface and the second receiving surface.

According to an embodiment, the other receiving surface may include another curved surface (e.g., the second curved surface 451 of FIG. 4C), connected to another end of the supporting surface, curved to have a curvature. According to an embodiment, the receiving surface may include another inclined surface (e.g., the second inclined surface 452 of FIG. 4C), connected to the other curved surface, inclined with respect to the supporting surface.

The electronic device according to an embodiment may provide a structure in which various components may be seated by the at least one seating groove defined between the supporting surface and the first receiving surface and between the supporting surface and the second receiving surface.

According to an embodiment, the electronic device may include a display (e.g., the display 220 of FIG. 4A), disposed on one surface (e.g., the one surface 400a of FIG. 5A) of the bracket, surrounded by the bracket. According to an embodiment, the supporting surface may be perpendicular to the one surface of the bracket.

Since the supporting surface supporting the electronic component is perpendicular to the one surface of the bracket on which the display is disposed, the electronic device according to an embodiment may provide a structure in which the electronic component may be stably disposed in the bracket.

According to an embodiment, the electronic device may include an adhesive member (e.g., the adhesive member 470 of FIGS. 4C and 4D), attaching the electronic component to the bracket by being disposed between the electronic component and the supporting surface.

According to an embodiment, the bracket may include a seating surface (e.g., the seating surface 460a of FIG. 4D), disposed in the seating groove, perpendicular to the supporting surface. According to an embodiment, the seating surface may face a side (e.g., the side 500b of FIG. 4D) of the electronic component perpendicular to the one surface of the electronic component.

According to an embodiment, the seating groove may include a first region (e.g., the first region 463 of FIGS. 6A and 6B). According to an embodiment, the seating groove may include a second region (e.g., the second region 464 of FIGS. 6A and 6B), connected to the first region, having a width smaller than a width of the first region.

Since the first region of the seating groove corresponds to a width of the electronic component, the electronic device according to an embodiment may provide a structure in which various components may be disposed.

According to an embodiment, the electronic component may be received in the first region among the first region and the second region.

Since the first region of the seating groove corresponds to a width of the electronic component, the electronic device according to an embodiment may provide a structure in which various components may be received.

According to an embodiment, the seating groove may include a first region (e.g., the first region 463 of FIGS. 7A and 7B). According to an embodiment, the seating groove may include a second region (e.g., the second region 464 of FIGS. 7A and 7B), connected to the first region, having a width smaller than a width of the first region. According to an embodiment, the seating groove may include a third region (e.g., the third region 465 of FIGS. 7A and 7B), connected to the second region, having a width smaller than a width of the second region.

An electronic device (e.g., the electronic device 300 of FIGS. 4A, 4C, and 4D) is provided. According to an embodiment, the electronic device may comprise a bracket (e.g., the bracket 400 of FIGS. 4A, 4B, 4C, and 4D). According to an embodiment, the electronic device may comprise an electronic component (e.g., the electronic component 500 of FIGS. 4A, 4C, and 4D) disposed in the bracket. According to an embodiment, the bracket may include a supporting surface (e.g., the supporting surface 430 of FIGS. 4A, 4B, 4C, and 4D), supporting a portion of the electronic component, parallel to one surface of the electronic component. According to an embodiment, the bracket may include a receiving surface (e.g., the first receiving surface 440 of FIGS. 4A, 4B, 4C, and 4D), connected to the supporting surface, having a gradient with respect to the supporting surface. According to an embodiment, the bracket may include a seating groove (e.g., the at least one seating groove 460 of FIGS. 4B and 4D), at least a portion disposed between the receiving surface and the supporting surface, extending along a direction inclined with respect to a direction in which the one surface of the electronic component faces. According to an embodiment, another portion of the electronic component may be received in at least a portion of the seating groove. According to an embodiment, a distance between the receiving surface and the one surface of the electronic component may be different according to points (e.g., the points P1, P2, and P3 of FIG. 4C) of the receiving surface.

The electronic device according to an embodiment may provide a structure in which the electronic component may be stably seated in the bracket by the seating groove disposed between the supporting surface and the receiving surface.

According to an embodiment, the bracket may include a recessed region (e.g., the recessed region 420 of FIGS. 4A and 4B) formed by a portion of the bracket being inwardly recessed in. According to an embodiment, the supporting surface, the receiving surface, and the seating groove may be disposed in the recessed region.

The electronic device according to an embodiment may provide a structure in which the electronic component may be stably supported in the bracket by the seating groove disposed in the recessed region.

According to an embodiment, the receiving surface may include a curved surface (e.g., the first curved surface 441 of FIGS. 4B and 4C), connected to one end of the supporting surface, curved to have a curvature. According to an embodiment, the receiving surface may include an inclined surface (e.g., the first inclined surface 442 of FIGS. 4B and 4C), connected to the curved surface, inclined with respect to the supporting surface. According to an embodiment, a gradient of one point (e.g., the first point P1 of FIG. 4C) of the curved surface with respect to the supporting surface may be different from a gradient of another point (e.g., the second point P2 of FIG. 4C) of the curved surface with respect to the supporting surface.

The electronic device according to an embodiment may provide a structure in which the electronic component may be stably seated in the bracket by the seating groove disposed between the supporting surface and the receiving surface having a shape different from a shape of the supporting surface.

According to an embodiment, the bracket may include an external surface (e.g., the external surface 410 of FIGS. 4A and 4B) which is exposed to an outside of the electronic device and surrounding the electronic component. According to an embodiment, a distance between one edge (e.g., the one edge 462b of FIG. 5B) of the seating groove and the external surface may be different from a distance between another edge (e.g., the other edge 462c of FIG. 5B) of the seating groove and the external surface.

Since the seating groove is formed in an inclined direction, the electronic device according to an embodiment may provide a structure in which the distance between the one edge of the seating groove and the external surface and the distance between the other edge of the seating groove and the external surface are different.

According to an embodiment, the electronic component may include a first printed circuit board (e.g., the first printed circuit board 510 of FIG. 4A), including a first portion (e.g., the first portion 511 of FIG. 4A), having a first width, disposed on the supporting surface, and a second portion (e.g., the second portion 512 of FIG. 4A) having a second width different from the first width and disposed in the seating groove. According to an embodiment, a width of the supporting surface may correspond to the first width. According to an embodiment, a width of the seating groove may correspond to the second width.

The electronic device according to an embodiment may provide a structure in which various components may be received by at least one seating groove defined between the supporting surface and a first receiving surface and between the supporting surface and a second receiving surface.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300) comprising:
a bracket (400); and
an electronic component (500) disposed in the bracket (400),
wherein the bracket (400) includes:
a supporting surface (430), supporting a portion of the electronic component (500), parallel to one surface (500a) of the electronic component (500),
a receiving surface (440), having a different shape with the supporting surface (430), and
a first seating groove (461), disposed between at least a portion of the receiving surface (440) and at least a portion of the supporting surface (430), extending along a direction inclined with respect to a direction in which the one surface of the electronic component faces,
wherein another portion of the electronic component (500) is received in the first seating groove (461), and
wherein a direction in which an imaginary surface (S1) tangent to a point (P1) of the receiving surface (440) faces is inclined with respect to a direction in which the supporting surface (430) faces.

2. The electronic device of claim 1,
wherein the bracket (400) further includes a recessed region (420) formed by a portion of the bracket (400) being inwardly recessed in, and
wherein the supporting surface (430), the receiving surface (440), the first seating groove (461) are disposed in the recessed region (420).

3. The electronic device of any one of claims 1 and 2,
wherein the receiving surface (440) includes:
a curved surface (441), connected to one end of the supporting surface (430), curved to have a curvature, and
an inclined surface (442), connected to the curved surface (441), inclined with respect to the supporting surface (430).

4. The electronic device of any one of claims 1 to 3,
wherein the bracket (400) further includes an external surface (410) which is exposed to an outside of the electronic device (101; 200; 300) and surrounding the electronic component (500), and
wherein a distance between one edge of the first seating groove (461) and the external surface (410) is different from a distance between another edge of the first seating groove (461) and the external surface (410).

5. The electronic device of any one of claims 1 to 4,
wherein the electronic component (500) includes a first printed circuit board (510) including:
a first portion (511) having a first width and disposed on the supporting surface (430), and
a second portion (512) having a second width different from the first width and disposed in the first seating groove (461),
wherein a width of the supporting surface (430) corresponds to the first width, and
wherein a width of the first seating groove (461) corresponds to the second width.

6. The electronic device of any one of claims 1 to 5,
wherein the electronic component (500) further includes:
a second printed circuit board (520), distinct from the first printed circuit board (510), in which a connector is disposed, and
a third printed circuit board (530), connecting the first printed circuit board (510) and the second printed circuit board (520), having flexibility.

7. The electronic device of any one of claims 1 to 6,
wherein the first width is larger than the second width.

8. The electronic device of any one of claims 1 to 7,
wherein the receiving surface (440) is connected to one end of the supporting surface (430),
wherein the bracket (400) further includes:
another receiving surface (450), connected to another end of the supporting surface (430), and
a second seating groove (462), extending along a direction having a gradient with respect to the direction in which the one surface (500a) of the electronic component (500) faces, wherein at least a portion of the second seating groove is disposed between the supporting surface (430) and the other receiving surface (450), and
wherein a direction in which an imaginary surface tangent to a point of the other receiving surface (450) faces is inclined with respect to a direction in which the supporting surface (430) faces.

9. The electronic device of any one of claims 1 to 8,
wherein the other receiving surface (450) includes:
another curved surface (451), connected to another end of the supporting surface (430), curved to have a curvature, and
another inclined surface (452), connected to the other curved surface (451), inclined with respect to the supporting surface (430).

10. The electronic device of any one of claims 1 to 9, further comprising:
a display, disposed on one surface (400a) of the bracket (400), surrounded by the bracket (400), and
wherein the supporting surface (430) is perpendicular to the one surface (400a) of the bracket (400).

11. The electronic device of any one of claims 1 to 10, further comprising:
an adhesive member attaching the electronic component (500) to the bracket (400) by being disposed between the electronic component (500) and the supporting surface (430).

12. The electronic device of any one of claims 1 to 11,
wherein the bracket (400) further includes a seating surface (460a), disposed in the first seating groove (461), perpendicular to the supporting surface (430), and
wherein the seating surface (460a) faces a side of the electronic component (500) perpendicular to the one surface (500a) of the electronic component (500).

13. The electronic device of any one of claims 1 to 12,
wherein the first seating groove (461) includes:
a first region, and
a second region, connected to the first region, having a width smaller than a width of the first region.

14. The electronic device of any one of claims 1 to 13,
wherein the electronic component (500) is received in the first region among the first region and the second region.

15. The electronic device of any one of claims 1 to 14,
wherein the first seating groove (461) includes:
a first region,
a second region, connected to the first region, having a width smaller than a width of the first region, and
a third region, connected to the second region, having a width smaller than a width of the second region.
